# EUROPÄISCHE PATENTSCHRIFT

(11) **EP 1 394 520 B1**
(45) Veröffentlichungstag und Bekanntmachung des Hinweises auf die Patenterteilung: **26.09.2007**
(21) Anmeldenummer: 03019049.0
(22) Anmeldetag: 22.08.2003
(51) Int. Cl.: G01K 3/06

(54) **Vorrichtung zur Erfassung der Temperatur eines Mediums, das durch einen Kanal strömt**
Device for sensing the temperature of a medium flowing through a channel
Dispositif pour évaluer la température d'un fluide s'écoulant dans un canal

(30) Priorität: 28.08.2002 DE 10240590
(43) Veröffentlichungstag der Anmeldung: 03.03.2004
(73) Patentinhaber: E.G.O. ELEKTRO-GERÄTEBAU GmbH, D-75038 Oberderdingen (DE)
(72) Erfinder: Block, Volker, 75015 Bretten (DE); Robin, Bernd, 76703 Kraichtal (DE); Suss, Alfred, 75015 Bretten (DE)
(74) Vertreter: Patentanwälte Ruff, Wilhelm, Beier, Dauster & Partner

(56) Entgegenhaltungen:
- EP-A- 0 726 450
- DE-A- 19 802 045
- DE-B- 2 938 086

## Beschreibung

### Anwendungsgebiet und Stand der Technik

Die Erfindung betrifft eine Vorrichtung gemäß dem Oberbegriff des Anspruchs 1 zur Erfassung der Temperatur eines Mediums, welches durch einen Kanal strömt.

Hierbei kann es sich beispielsweise um eine Vorrichtung zur Temperaturerfassung von aufgeheizter oder aufzuheizender Luft handeln, welche durch einen Kanal geleitet wird. Hierbei ist es von großer Bedeutung, in einem unter Umständen verwirbelten und somit keine gleichmäßige Temperaturverteilung aufweisenden Medium eine Temperatur zu messen, die im Prinzip weder von besonders heißen noch von besonders kalten Stellen beeinträchtigt ist. In vielen Fällen strömt nämlich ein Medium entweder mit einem konstanten oder veränderlichen Temperaturprofil über den Querschnitt durch einen Kanal. Es kann bei Anbringung eines Temperatursensors in dem Kanal nicht genau vorhergesagt werden, ob man nicht sozusagen eine für die Messung ungünstige Stelle ausgesucht hat.

Zum Teil ist es im Stand der Technik versucht worden, durch das Vorsehen mehrerer oder sogar einer Vielzahl von Temperatursensoren in dem Kanal in etwa eine gleichzeitige bzw. flächig verteilte Temperaturerfassung zu erhalten. Dabei ist der Aufwand sehr groß.

Die DE 19802045 A zeigt eine Art gelochtes Blech, welches in einem Luftstrom angeordnet ist und in seiner Mitte einen Temperatursensor in Form eines temperaturabhängigen Widerstandes trägt. Daraus geht der Grundgedanke hervor, dass ein Fühlerkörper quer über den Querschnitt des Luftstroms verteilt ist bzw. sich erstreckt und daran ein Temperatursensor angeordnet ist. Somit befindet sich der Temperatursensor hier ebenfalls im Luftstrom.

Die DE 2938086 B zeigt einen über den Querschnitt eines beispielsweise Kühlmittel führenden Rohres verteilten Wärmekörper, wobei an dem Wärmeleitkörper ein Temperatursensor angeordnet ist. Der Temperatursensor ist dabei derart an dem Wärmeleitkörper angeordnet, dass er direkt von dem Kühlmittel angeströmt wird.

Die EP-A-0726450 zeigt einen Temperatursensor in einem Luftstrom mit einem Wärmeleitkörper, wobei der Wärmeleitkörper sozusagen über die Fläche integrierend wirken soll. Dabei ist der Temperaturfühler in dem Luftstrom angeordnet, und zwar etwas zur Seite hin versetzt.

### Aufgabe und Lösung

Der Erfindung liegt die Aufgabe zugrunde, eine eingangs genannte Vorrichtung zur Temperaturerfassung eines Mediums in einem Kanal zu schaffen, die einerseits eine zuverlässige Erfassung der Temperatur ermöglicht und andererseits nur einen begrenzten Aufwand hinsichtlich des Einsatzes von Temperatursensoren erfordert.

Gelöst wird diese Aufgabe durch eine Vorrichtung mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß weist die Vorrichtung einen Fühlerkörper auf mit mehreren länglichen Fühlerabschnitten. Die Fühlerabschnitte reichen in den Kanal hinein, wobei sie auch im wesentlichen oder vollständig durch den Kanal bzw. seinen gesamten Querschnitt hindurchreichen können. Der Temperatursensor zur eigentlichen Temperaturerfassung und Umsetzung in einen Messwert ist an dem Fühlerkörper angeordnet. Diese Anordnung erfolgt mit einem thermischen Kontakt. So kann gewährleistet werden, dass der Temperatursensor auch möglichst wiedergabetreu die Temperatur des Fühlerkörpers erfasst und weitergibt.

Durch die Fühlerabschnitte, die verteilt sein können und zumindest einen Teil des Querschnitts des Kanals bedecken oder in diesen reichen, ist es möglich, die Temperatur über eine große Querschnittsfläche hinweg verteilt zu erfassen und durch Wärmeleitung in dem Fühlerkörper mit den Fühlerabschnitten an den Temperatursensor weiterzugeben. Auf diese Art und Weise kann eine Art integrale Temperaturerfassung über zumindest die von den Fühlerabschnitten bedeckte Querschnittsfläche des Kanals und somit des strömenden Mediums erzielt werden.

Die Fühlerabschnitte können dabei gerade und/oder parallel zueinander verlaufen. Vorteilhaft sind sie mit gleichem Abstand zueinander versehen. Des weiteren ist es möglich, die Fühlerabschnitte nur in eine Richtung verlaufend auszubilden. Dies kann besonders für die Herstellung eines solchen Fühlerkörpers bzw. der Fühlerabschnitte von Vorteil sein.

Anstelle in etwa äquidistanter Fühlerabschnitte kann es in Abhängigkeit von dem gewählten Kanal oder Kanalquerschnitt vorgesehen sein, die Abstände der Fühlerabschnitte derart zu wählen, dass das Strömungsprofil des Mediums in dem Kanal möglichst erhalten bleibt bzw. in etwa demjenigen entspricht, welches ohne Fühlerkörper mit Abschnitten vorliegen würde.

Alternativ zu lediglich in einer Richtung verlaufenden Fühlerabschnitten kann vorgesehen sein, dass die Fühlerabschnitte Querverbindungen zueinander aufweisen. Diese können im wesentlichen quer zu ihrer Längserstreckung von einem Fühlerabschnitt zu einem anderen, vorteilhaft dem nächsten, Fühlerabschnitt verlaufen. So kann eine Art Gitter oder Netz erzeugt werden. Besonders vorteilhaft ist es dabei, wenn die Querverbindungen einstückig mit zumindest einem der Fühlerabschnitte, insbesondere allen Fühlerabschnitten, ausgebildet sind.

Die Fühlerabschnitte selber können auf vielfältige Art und Weise ausgebildet sein. Vorteilhaft sind sie stabförmige, beispielsweise längliche, Finger. Dabei kann ihr Querschnitt abgerundet oder kreisrund sein. Vorteilhaft ist der Querschnitt über ihre Längserstreckung hin im wesentlichen gleichbleibend. Dies bedingt zum einen ein einigermaßen gleiches Strömungsprofil in dem Kanal sowie eine gleichbleibende Wärmeleitung in den Fühlerabschnitten. Es kann vorgesehen sein, dass der Querschnitt der Fühlerabschnitte in Strömungsrichtung des Mediums ausgedehnter ist als quer dazu. Dies bedeutet eine geringere Widerstandsfläche gegen das strömende Medium und über die längeren Seitenflächen eine gute Wärme- bzw. Temperaturaufnahme aus dem strömenden Medium.

Über den Abstand der Fühlerabschnitte zueinander kann der Strömungswiderstand gegenüber dem strömenden Medium eingestellt werden. Vorteilhaft liegen hier die freien Zwischenräume zwischen zwei benachbarten Fühlerabschnitten in etwa in der Größenordnung der Ausdehnung der Fühlerabschnitte quer zur Strömungsrichtung des Mediums. Dies bedeutet, dass insgesamt die durchströmte Querschnittsfläche des Kanals in etwa so groß ist wie die von den Fühlerabschnitten gebildete Widerstandsfläche. Vorteilhaft kann so erreicht werden, dass der Durchflussquerschnitt für das Medium durch den Kanal bzw. die Fühlerabschnitte in etwa der gesamten Stirnfläche der Fühlerabschnitte in dem Kanal entspricht.

Die Fühlerabschnitte können zur Einhaltung eines möglichst gleichmäßigen Strömungsprofils in dem Kanal in einer zusammenhängenden Fläche verlaufen. Diese Fläche verläuft vorteilhaft quer zur Strömungsrichtung des Mediums, so dass sie das Medium nicht zu einer Kanalseite hin lenkt, außer es wäre erwünscht. Besonders vorteilhaft ist die Fläche eine Ebene. Möglich wäre es auch, entsprechend dem Strömungsprofil die Fläche der Fühlerabschnitte auszubilden.

Der Fühlerkörper kann an zumindest einer Seite einen Grundkörper aufweisen, von dem die Fühlerabschnitte abstehen. Dies bedeutet, dass der Fühlerkörper aus einem Grundkörper mit davon abstehenden Fühlerabschnitten besteht. Der Grundkörper selber kann höchstens geringfügig in den Kanal reichen. Zum einen sollte er den Kanalquerschnitt nicht zusätzlich verengen. Des weiteren würde dadurch eine Beeinflussung der in dem Fühlerkörper in etwa gleichmäßig verteilten Temperatur durch das lokal daran vorbeiströmende Medium und somit eine Verfälschung der Temperaturerfassung vorliegen.

Um eine möglichst gute Wärmeleitung der Fühlerabschnitte mit dem Grundkörper, also innerhalb des Fühlerkörpers insgesamt, zu erreichen, ist eine Verbindung vorteilhaft einstückig. Besonders vorteilhaft ist der gesamte Fühlerkörper aus einem Stück gefertigt, so dass auch nach Möglichkeit Grenzschicht- bzw. Oberflächenübergänge vermieden werden. Als Material bietet sich für die Fühlerabschnitte, vorzugsweise auch für den Grundkörper bzw. den gesamte Fühlerkörper, ein Metall mit guter Wärmeleitung an. Hier wird besonders Aluminium oder Kupfer als vorteilhaft angesehen. Diese sind zum einen leicht zu verarbeiten und weisen zum anderen besonders gute Wärmeleiteigenschaften auf. Fühlerkörper können beispielsweise durch Gießen oder Strangpressen oder dergleichen hergestellt werden.

Der Temperatursensor kann an dem Grundkörper angeordnet werden. Hier bietet sich vor allem eine Anordnung in etwa in der Mitte des Grundkörpers bezüglich der Breite oder des Querschnitts des Kanals an. So befindet sich der Temperatursensor in etwa in der Mitte der Fläche zwischen allen Fühlerabschnitten, die die eigentliche Übertragung der Temperatur von dem Medium in dem Kanal an den Grundkörper bewirken.

Erfindungsgemäß ist der Temperatursensor außerhalb des Kanals angeordnet. So kann wiederum eine Verfälschung durch lokale Temperaturüberhöhungen des Mediums in dem Kanal an einer Stelle vermieden werden.

Es ist möglich, einen Kanal mit einer festen Wandung mit einer vorbeschriebenen Vorrichtung zur Temperaturerfassung zu verwenden. Der Fühlerkörper bzw. die ganze Vorrichtung kann an der Wandung befestigt oder in einen entsprechenden Ausschnitt eingesetzt sein. So ist eine Befestigung leicht und vorteilhaft möglich.

Des weiteren kann, falls in dem Kanal strömendes Medium bewusst erwärmt werden soll, eine Heizung vorgesehen sein. Diese kann unter dem Gedanken einer Modulbildung mit der Vorrichtung, beispielsweise mit dem Grundkörper, verbunden sein. So braucht nur eine Funktionseinheit an einem Kanal befestigt zu werden, die gleichzeitig eine Erwärmung des Mediums und die Erfassung der Temperatur des Mediums ermöglicht. Die Heizung kann einen Wärmeübertragerkörper aufweisen. Dieser kann entweder ähnlich wie der Fühlerkörper oder entsprechend üblichen Wärmeübertragerkörpern ausgebildet sein. Alternativ zu einer Heizung kann eine Kühlung des Mediums in dem Kanal vorgesehen sein. Dies wird dann analog mit einer entsprechenden Vorrichtung vorgesehen.

Vorteilhaft wird bei einem vorbeschriebenen Modul der Fühlerkörper, also die Vorrichtung zur Temperaturerfassung, in Strömungsrichtung des Mediums gesehen hinter der Heizung angeordnet. Somit kann die Temperatur des Mediums nach dem Aufheizen gemessen werden. Dies kann beispielsweise als Anhaltspunkt für eine Temperaturregelung über die Heizung dienen.

Einerseits ist es möglich, den Temperatursensor als diskretes Bauteil auszubilden. Möglich sind Temperatursensoren, die beispielsweise auf einem Widerstandseffekt basieren. Alternativ kann der Temperatursensor in ein Heizelement, beispielsweise eine Dickschichtelement, integriert sein und mit diesem aufgebracht werden.

Es ist möglich, den Temperatursensor zur Herstellung einer möglichst dauerhaften sowie möglichst gut wärmeleitenden Verbindung unlösbar an dem Fühler- oder Grundkörper anzubringen. Hierbei kann auch das Vorsehen von entsprechenden Wärmeleitpasten oder -klebern von Vorteil sein.

Somit kann insgesamt gesagt werden, dass durch den flächig verteilten ausgedehnten Fühlerkörper eine flächige Temperaturerfassung erfolgt. Durch Wärmeleitung in den Fühlerabschnitten bzw. in dem Fühlerkörper wird eine möglichst gleichmäßig Temperatur innerhalb des Fühlerkörpers erreicht durch Temperaturausgleich untereinander. Somit kann an einer im wesentlichen beliebigen Stelle des Fühlerkörpers eine Temperatur abgegriffen werden, die in etwa einer gemittelten oder integralen Temperatur, stellvertretend für eine Durchschnittstemperatur der gesamten Querschnittsfläche des Kanals, entspricht. Besonders warme oder besonders kalte Stellen gleichen sich untereinander aus. Solche Temperaturspitzen gehen jedoch bei der Erfassung der Gesamttemperatur nicht völlig verloren, sondern fließen entsprechend ihrem sozusagen flächig erfassten Anteil mittels eines oder mehrerer Fühlerabschnitte in die gesamte Temperatur ein. Es kann insbesondere eine Durchschnittstemperatur des Mediums erfasst werden. Der Durchschnitt kann sich auf eine zeitliche und/oder örtliche Verteilung beziehen.

Somit kann bei einem Ausführungsbeispiel der Erfindung eine Vorrichtung zur Erfassung der Temperatur eines Mediums geschaffen werden, welches durch einen Kanal strömt. Die Vorrichtung weist einen Fühlerkörper auf mit einem Grundkörper, von dem längliche Fühlerarme abstehen und nach Art eines Vorhangs durch den Kanal reichen. Ein Temperatursensor ist an dem Fühlerkörper angeordnet. Durch die flächig verteilt über den Querschnitt des Kanals erstreckten Fühlerarme erfolgt eine Art flächenmäßiger, integraler Temperaturerfassung mit Mittelung der Temperatur. Diese gemittelte Temperatur wird über den Temperatursensor abgegriffen. So können besonders starke lokale Temperaturabweichungen des Mediums nicht zu einer Verfälschung des Ergebnisses der gesamten Temperatur führen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

### Kurzbeschreibung der Zeichnungen

Ein Ausführungsbeispiel der Erfindung ist in den Zeichnungen dargestellt und wird im folgenden näher erläutert. In den Zeichnungen zeigen:
- Fig. 1: eine Draufsicht auf eine Vorrichtung mit Wärmeübertrager sowie zwei erfindungsgemäßen Erfassungsvorrichtungen in einem Kanal,
- Fig. 2: eine Seitenansicht der Anordnung aus Fig. 1 und
- Fig. 3: eine Vorderansicht der Anordnung aus Fig. 1 in Strömungsrichtung des Mediums in dem Kanal gesehen.

### Detaillierte Beschreibung des Ausführungsbeispiels

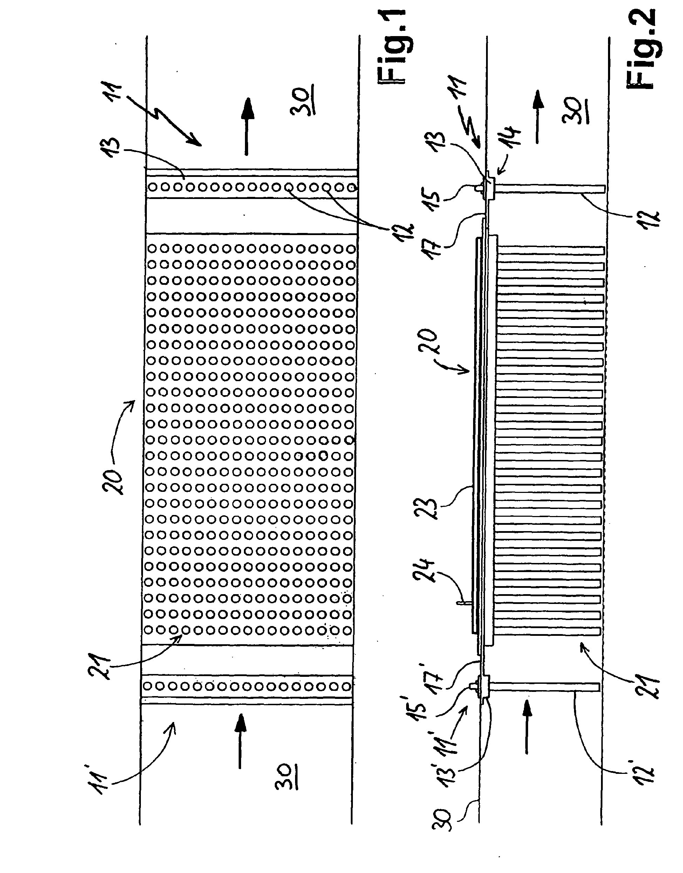

In Fig. 1 ist in schematischer Darstellung eine beispielhafte erfindungsgemäße Vorrichtung 11 zur Erfassung der Temperatur eines Mediums in einem Kanal 30 dargestellt. Die Vorrichtung 11 ist in Durchströmungsrichtung des Mediums von links nach rechts hinter einer Heizung 20 angeordnet. Vor der Heizung ist noch eine weitere Vorrichtung 11' angeordnet, welche der Vorrichtung 11 im wesentlichen entspricht. So kann die Temperatur des Mediums in dem Kanal 30 sowohl vor als auch hinter der Heizung 20 erfasst werden. Damit kann zum einen auf eine gewünschte Endtemperatur des Mediums geregelt werden. Des weiteren kann die eingekoppelte Energie aus der Temperaturdifferenz bestimmt werden.

Die Vorrichtung 11 weist längliche, stabförmige Fühlerarme 12 mit rundem Querschnitt auf. Diese stehen von dem Grundkörper 13 ab und verlaufen parallel sowie äquidistant zueinander. Fühlerarme 12 und Grundkörper 13 bilden den Fühlerkörper 14. Wie insbesondere aus Fig. 2 zu erkennen ist, reicht der Grundkörper 13 in den Kanal 30 hinein und wird so von dem Medium an der Oberseite des Kanals angeströmt. Ebenso ist es möglich, den Grundkörper 13 außerhalb des Kanals 30 bzw. au-ßerhalb einer Kanalwandung anzuordnen.

An der Außenseite außerhalb des Kanals 30 trägt der Grundkörper 13 den Temperatursensor 15. Dieser kann auf nicht dargestellter Weise mit einer Steuerung verbunden sein.

Des weiteren ist zu erkennen, wie die Vorrichtung 11 mit einem Verbindungsabschnitt 17 mit der Heizung 20 bzw. einem Wärmeübertrager 21 der Heizung verbunden ist. Hier ist vorgesehen, dass Fühlerkörper 14 bzw. Vorrichtung 11 und Wärmeübertrager 21 bzw. Heizung 20 an sich zwei separate Bauteile sind, die zusammengefügt werden. Dies hat den Vorteil, dass sie als eine Baueinheit leichter handhabbar sind.

Alternativ zu dieser getrennten Ausbildung ist bei der Vorrichtung 11' vor der Heizung 20 zu erkennen, dass hier der Fühlerkörper 14 einstückig mit dem Wärmeübertrager 21 ausgebildet ist. Dies kann insbesondere unter produktionstechnischen Aspekten von Vorteil sein.

Die Heizung 20 weist an ihrer Außenseite des Wärmeübertragers 21 eine flächige Dickschichtheizung 23 auf. Derartige Dickschichtheizungen sind bekannt und brauchen hier nicht näher erläutert zu werden. Über einen Anschluss 24 wird die Dickschichtheizung 23 bzw. die Heizung 20 mit einer Ansteuerung verbunden. Die Ausbildung des Wärmeübertragers 21 mit den zahlreichen abstehenden Fühlerarmen ähnlich denjenigen der Vorrichtung 11 und 11', ist ebenso bekannt und braucht hier nicht näher erläutert zu werden.

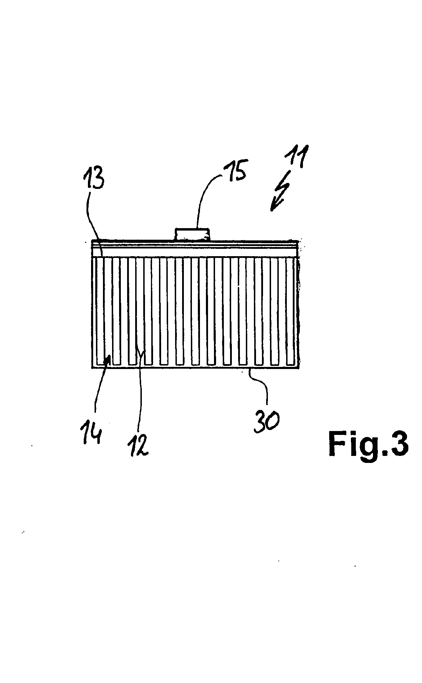

Aus der Darstellung in Fig. 3, welche eine Draufsicht auf die Vorrichtung 11 bzw. den Fühlerkörper 14 in Durchströmungsrichtung des Mediums zeigt, ist ersichtlich, dass die Fühlerarme 12 in etwa den halben Querschnitt des Kanals 30 einnehmen. So wird, wie zuvor ausgeführt worden ist, zum einen ein ausreichend großer Durchströmungsquerschnitt für das Medium erhalten. Zum anderen erfolgt eine ausreichend gute und genaue Abdeckung der Querschnittsfläche durch die Fühlerarme 12 für die vorgenannte integrale Temperaturerfassung.

In Variation der Erfindung ist es selbstverständlich möglich, wie zuvor ausgeführt worden ist, die Fühlerarme schmaler und enger angeordnet auszubilden. Ebenso könnten Querverbindungen vorgesehen sein für eine netzartige Überdeckung. Des weiteren ist es möglich, beispielsweise wie bei Kühlern eines Automobils, einen wellen- oder schlangenartigen Verlauf der Fühlerarme 12 vorzusehen.

## Patentansprüche

1. Vorrichtung zur Erfassung der Temperatur eines Mediums, das durch einen Kanal (30) strömt, wobei die Vorrichtung (11) einen Temperatursensor (15) aufweist, wobei die Vorrichtung (11) einen Fühlerkörper (14) aufweist mit mehreren länglichen Fühlerabschnitten (12), wobei die Fühlerabschnitte in oder durch den Kanal (30) reichen und der Temperatursensor (15) an dem Fühlerkörper (14) mit thermischem Kontakt dazu angeordnet ist, **dadurch gekennzeichnet, dass** der Temperatursensor (15) außerhalb des Kanals (30) angeordnet ist.

2. Vorrichtung nach Anspruch 1, **dadurch gekennzeichnet, dass** die Fühlerabschnitte (12) durch den gesamten Querschnitt des Kanals (30) reichen.

3. Vorrichtung nach Anspruch 1 oder 2, **dadurch gekennzeichnet, dass** die Fühlerabschnitte (12) gerade und/oder parallel sind, vorzugsweise mit jeweils gleichem Abstand zueinander, wobei insbesondere die Fühlerabschnitte (12) nur in einer Richtung verlaufen.

4. Vorrichtung nach einem der vorhergehenden Ansprüche, **dadurch gekennzeichnet, dass** die Fühlerabschnitte (12) stabförmig sind, insbesondere mit abgerundetem oder kreisrundem Querschnitt.

5. Vorrichtung nach einem der vorhergehenden Ansprüche, **dadurch gekennzeichnet, dass** der Abstand der Fühlerabschnitte (12) zueinander derart ist, dass die freien Zwischenräume zwischen zwei benachbarten Fühlerabschnitten in etwa in der Größenordnung der Ausdehnung der Fühlerabschnitte quer zur Strömungsrichtung des Mediums sind.

6. Vorrichtung nach einem der vorhergehenden Ansprüche, **dadurch gekennzeichnet, dass** ein Durchflussquerschnitt für das Medium durch die Fühlerabschnitte (12) in etwa so groß ist wie die Stirnfläche der Fühlerabschnitte in dem Kanal (30).

7. Vorrichtung nach einem der vorhergehenden Ansprüche, **dadurch gekennzeichnet, dass** die Ausdehnung der Fühlerabschnitte (12) in Strömungsrichtung des Mediums in etwa so groß ist wie quer dazu.

8. Vorrichtung nach einem der vorhergehenden Ansprüche, **dadurch gekennzeichnet, dass** der Fühlerkörper (14) an einer Seite einen Grundkörper (13) aufweist, von dem die Fühlerabschnitte (12) abstehen, wobei vorzugsweise der Grundkörper (13) höchstens geringfügig in den Kanal (30) reicht.

9. Vorrichtung nach einem der vorhergehenden Ansprüche, **dadurch gekennzeichnet, dass** die Fühlerabschnitte (12) einstückig mit dem Grundkörper (13) verbunden sind, wobei vorzugsweise der gesamte Fühlerkörper (14) aus einem Stück gefertigt ist.

10. Vorrichtung nach einem der vorhergehenden Ansprüche, **dadurch gekennzeichnet, dass** der Temperatursensor (15) an dem Grundkörper (13) angeordnet ist, vorzugsweise in etwa in der Mitte des Grundkörpers bezüglich der Kanalbreite bzw. des Kanalquerschnitts.

11. Vorrichtung nach einem der vorhergehenden Ansprüche, **dadurch gekennzeichnet, dass** die Vorrichtung (11), insbesondere der Grundkörper (13), mit einer Heizung (20) verbunden ist, welche insbesondere einen Wärmeübertragerkörper (21) aufweist, welcher in den Kanal (30) reicht.

12. Vorrichtung nach Anspruch 11, **dadurch gekennzeichnet, dass** der Fühlerkörper (14) in Strömungsrichtung des Mediums hinter der Heizung (20) angeordnet ist.

13. Vorrichtung nach einem der vorhergehenden Ansprüche, **dadurch gekennzeichnet, dass** der Temperatursensor (15) in ein Heizelement, welches vorzugsweise als Dickschichtelement (23) aufgebracht ist, integriert ist.

## Claims

1. Device for determining the temperature of a medium, which flows through a duct (30) and in which the device (11) has a temperature sensor (15), wherein the device (11) has a probe body (14) with several elongated probe sections (12), the probe sections extending into or through the duct (30), the temperature sensor (15) being arranged on the probe body (14) with thermal contact thereto, **characterized in that** the temperature sensor (15) is positioned outside the duct (30).

2. Device according to claim 1, **characterized in that** the probe sections (12) extend through the entire cross-section of the duct (30).

3. Device according to claim 1 or 2, **characterized in that** the probe sections (12) are straight and/or parallel, preferably with in each case an identical mutual spacing and in particular the probe sections (12) run in a single direction.

4. Device according to one of the preceding claims, **characterized in that** the probe sections (12) are rod-like, particularly with a rounded or circular cross-section.

5. Device according to one of the preceding claims, **characterized in that** the probe sections (12) are spaced from one another in such a way that the free gaps between two adjacent probe sections are roughly of the order of magnitude of the extension of the probe sections transverse to the medium flow direction.

6. Device according to one of the preceding claims, **characterized in that** the flow cross-section for the medium through the probe sections (12) is roughly as large as the end face of the probe sections in the duct (30).

7. Device according to one of the preceding claims, **characterized in that** the extension of the probe sections (12) in the medium flow direction is roughly the same as transverse thereto.

8. Device according to one of the preceding claims, **characterized in that** on one side the probe body (12) has a base member (13) from which the probe sections (12) project and preferably the base member (13) at the most only extends slightly into the duct (30).

9. Device according to one of the preceding claims, **characterized in that** the probe sections (12) are connected in one piece with the base member (13) and preferably the probe body (14) is made in one piece.

10. Device according to one of the preceding claims, **characterized in that** the temperature sensor (15) is placed on the base member (13), preferably roughly in the centre of the base member (13) with respect to the duct width or duct cross-section.

11. Device according to one of the preceding claims, **characterized in that** the device (11), particularly the base member (13) is connected to a heater (20), which in particular includes a heat transfer body (21) extending into the duct (30).

12. Device according to claim 11, **characterized in that** the probe body (14) is positioned downstream of the heater (20) in the medium flow direction.

13. Device according to one of the preceding claims, **characterized in that** the temperature sensor (15) is integrated into a heating element, which is preferably fitted as a thick film element (23).

## Revendications

1. Dispositif pour détecter la température d'une substance, qui s'écoule à travers un conduit (30), sachant que le dispositif (11) présente un capteur de température (15) et que le dispositif (11) présente un corps de détecteur (14) avec plusieurs sections de détecteur (12) oblongues et sachant que les sections de détecteur s'étendent dans ou à travers le conduit (30) et que le capteur de température (15) est disposé sur le corps de détecteur (14) en présentant un contact thermique par rapport à celui-ci, **caractérisé en ce que** le capteur de température (15) est disposé à l'extérieur du conduit (30).

2. Dispositif d'après la revendication 1, **caractérisé en ce que** les sections de détecteur (12) s'étendent à travers toute la section transversale du conduit (30).

3. Dispositif d'après la revendication 1 ou 2, **caractérisé en ce que** les sections de détecteur (12) sont droites et/ou parallèles, et présentant de préférence la même distance entre elles, sachant que notamment les sections de détecteur (12) s'étendent dans une seule direction.

4. Dispositif d'après une des revendications précédentes, **caractérisé en ce que** les sections de détecteur (12) présentent une forme de tige, notamment avec une section transversale arrondie ou circulaire.

5. Dispositif d'après une des revendications précédentes, **caractérisé en ce que** l'écart entre les sections de détecteur (12) limitrophes est tel que les interstices libres entre deux sections de détecteur correspondent à peu près à la dimension de l'étendue des sections de détecteur transversalement par rapport à la direction d'écoulement de la substance.

6. Dispositif d'après une des revendications précédentes, **caractérisé en ce qu'**une section de passage pour la substance à travers les sections de détecteur (12) est à peu près aussi grande que la surface frontale des sections de détecteur dans le conduit (30).

7. Dispositif d'après une des revendications précédentes, **caractérisé en ce que** l'étendue des sections de détecteur (12) en direction d'écoulement de la substance est à peu près aussi grande qu'en direction transversale par rapport à celle-ci.

8. Dispositif d'après une des revendications précédentes, **caractérisé en ce que** le corps de détecteur (14) présente d'un côté un corps de base (13), à partir duquel saillent les sections de détecteur (12), sachant que de préférence le corps de base (13) s'étend au plus légèrement à l'intérieur du conduit (30).

9. Dispositif d'après une des revendications précédentes, **caractérisé en ce que** les sections de détecteur (12) sont raccordées d'une seule pièce au corps de base (13), sachant que de préférence tout le corps de détecteur (14) est réalisé d'une seule pièce.

10. Dispositif d'après une des revendications précédentes, **caractérisé en ce que** le capteur de température (15) est disposé sur le corps de base (13), de préférence à peu près au centre du corps de base par rapport à la largeur du conduit ou encore à la section transversale du conduit.

11. Dispositif d'après une des revendications précédentes, **caractérisé en ce que** le dispositif (11), notamment le corps de base (13), est raccordé à un chauffage (20), qui présente notamment un corps caloporteur (21) qui s'étend à l'intérieur du conduit (30).

12. Dispositif d'après la revendication 11, **caractérisé en ce que** le corps de détecteur (14) est disposé derrière le chauffage (20) en direction d'écoulement de la substance.

13. Dispositif d'après une des revendications précédentes, **caractérisé en ce que** le capteur de température (15) est intégré dans un élément de chauffage, qui est réalisé de préférence en tant qu'élément en couche épaisse (23).
